# EUROPEAN PATENT APPLICATION

(11) **EP 4 679 694 A1**
(43) Date of publication of application: **14.01.2026**
(21) Application number: 25183707.6
(22) Date of filing: 18.06.2025
(51) Int. Cl.: H02M 1/08, H02M 1/32, H02M 3/335

(54) **POWER SUPPLY DEVICE**

(30) Priority: 12.07.2024 JP 2024112622
(71) Applicant: Yokogawa Electric Corporation, Tokyo 180-8750 (JP)
(72) Inventor: SHIMIZU, Yuusuke, Musashino-shi, Tokyo 180-8750 (JP); FUKUHARA, Kei, Musashino-shi, Tokyo 180-8750 (JP)
(74) Representative: Winter, Brandl - Partnerschaft mbB

(57) **Abstract**

A power supply device (1) includes an intermittent voltage generation circuit (110), a rectifying and smoothing circuit (120), a synchronous rectifier element drive circuit (17), an abnormality detection circuit (130), a load current detection circuit (150), and a protection circuit (160). The intermittent voltage generation circuit (110) generates an intermittent voltage from an input voltage from an external power supply by a switching element that is repeatedly turned on and off. The rectifying and smoothing circuit (120) rectifies the intermittent voltage by a synchronous rectifier element that is turned on and off in synchronization with on and off of the switching element, smooths the intermittent voltage by a capacitor, and supplies the intermittent voltage to a load. The synchronous rectifier element drive circuit (17) supplies a control signal for turning on and off the synchronous rectifier element to a control terminal of the synchronous rectifier element. The abnormality detection circuit (130) detects an abnormality in the synchronous rectifier element drive circuit. The load current detection circuit (150) detects a load current that is a current of the load supplied by the rectifying and smoothing circuit. The protection circuit (160) performs a protection operation on the basis of a detection result of the abnormality detection circuit and a detection result of the load current detection circuit.

## Description

### FIELD

The present disclosure relates to a power supply device.

### BACKGROUND

In a switching power supply or the like, a power supply circuit is used in which a synchronous rectifier circuit is applied to a rectifier circuit on the secondary side (see, for example, JP 2001-292572 A). This synchronous rectification is a method in which a synchronous rectifier element such as a MOS transistor is switched between conduction and non-conduction and used as a rectifier element. The synchronous rectifier circuit can make the loss lower than a rectifier circuit using a diode.

### SUMMARY

It is an object of the present invention to at least partially solve the problems in the conventional technology.

A power supply device according to the present disclosure includes: an intermittent voltage generation circuit that generates an intermittent voltage from an input voltage from an external power supply by a switching element that is repeatedly turned on and off; a rectifying and smoothing circuit that rectifies the intermittent voltage by a synchronous rectifier element that is turned on and off in synchronization with on and off of the switching element, smooths the intermittent voltage by a capacitor, and supplies the intermittent voltage to a load; a synchronous rectifier element drive circuit that supplies a control signal for turning on and off the synchronous rectifier element to a control terminal of the synchronous rectifier element; an abnormality detection circuit that detects an abnormality in the synchronous rectifier element drive circuit; a load current detection circuit that detects a load current that is a current of the load supplied by the rectifying and smoothing circuit; and a protection circuit that performs a protection operation on a basis of a detection result of the abnormality detection circuit and a detection result of the load current detection circuit.

The above and other objects, features, advantages and technical and industrial significance of this invention will be better understood by reading the following detailed description of presently preferred embodiments of the invention, when considered in connection with the accompanying drawings.

As a drive circuit that drives the synchronous rectifier element, a circuit is used that detects a timing at which the synchronous rectifier element is brought into a conductive state, generates a drive signal, and applies the drive signal to a gate of the MOS transistor constituting the synchronous rectifier element. There is a problem that, when the control signal is not supplied to the gate of the MOS transistor as the synchronous rectifier element due to a failure of the drive circuit or the like, a body diode of the MOS transistor becomes conductive and the loss of the MOS transistor increases.

Therefore, the present disclosure proposes a power supply device that detects an abnormality in a synchronous rectifier element and protects the synchronous rectifier element.

### BRIEF DESCRIPTION OF THE DRAWINGS

FIG. 1 is a diagram illustrating a configuration example of a power supply device according to a first embodiment of the present disclosure;
FIG. 2 is a diagram illustrating an example of a synchronous rectifier element according to the first embodiment of the present disclosure;
FIG. 3 is a diagram illustrating a configuration example of an abnormality detection circuit according to the first embodiment of the present disclosure;
FIG. 4 is a diagram illustrating an example of abnormality detection according to the first embodiment of the present disclosure;
FIG. 5 is a diagram illustrating a configuration example of a load current detection circuit according to the first embodiment of the present disclosure;
FIG. 6 is a diagram illustrating a configuration example of a protection circuit according to the first embodiment of the present disclosure;
FIG. 7 is a diagram illustrating a configuration example of a power supply device according to a second embodiment of the present disclosure;
FIG. 8 is a diagram illustrating a configuration example of a current limiting circuit and a protection circuit according to the second embodiment of the present disclosure;
FIG. 9 is a diagram illustrating an example of operation of the current limiting circuit and the protection circuit according to the second embodiment of the present disclosure;
FIG. 10 is a diagram illustrating a configuration example of a power supply device according to a third embodiment of the present disclosure;
FIG. 11 is a diagram illustrating a configuration example of a power supply device according to a fourth embodiment of the present disclosure; and
FIG. 12 is a diagram illustrating a configuration example of a power supply device according to a fifth embodiment of the present disclosure.

### DESCRIPTION OF EMBODIMENTS

Hereinafter, embodiments of the present disclosure will be described in detail with reference to the drawings. The description will be given in the following order. Note that, in each of the following embodiments, the same parts are denoted by the same reference numerals, and redundant description will be omitted.
1. First embodiment
2. Second embodiment
3. Third embodiment
4. Fourth embodiment
5. Fifth Embodiment

### 1. First embodiment

### Configuration of power supply device

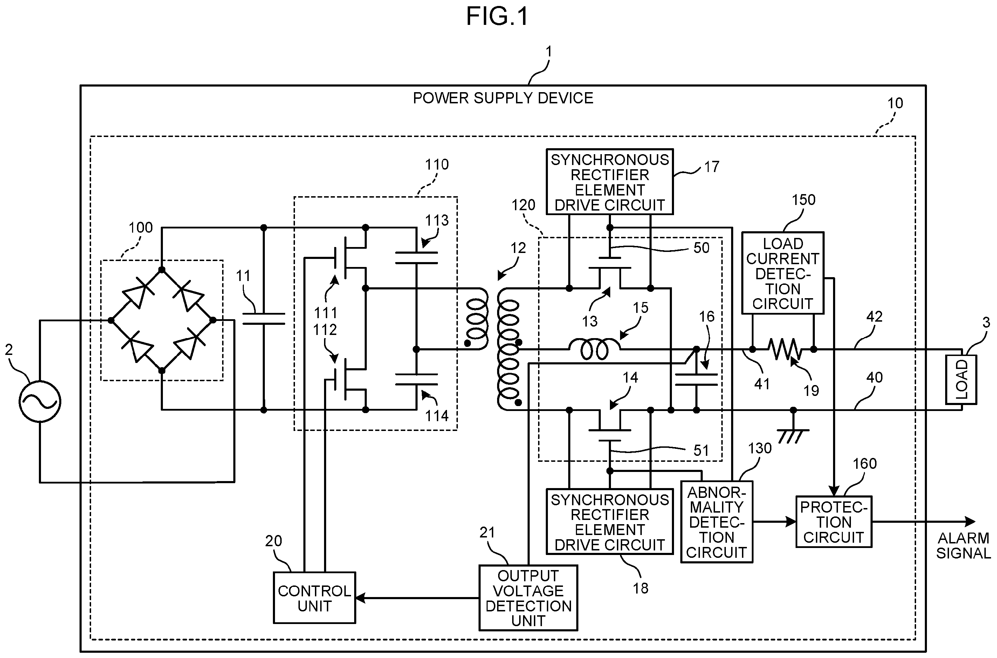

FIG. 1 is a diagram illustrating a configuration example of a power supply device according to a first embodiment of the present disclosure. The drawing is a circuit diagram illustrating a configuration example of a power supply device 1. The power supply device 1 converts an input voltage from an AC power supply 2 into a DC voltage of a desired voltage and outputs the DC voltage. The power supply device 1 in the drawing supplies the DC voltage to a load 3.

The power supply device 1 includes a rectifier circuit 100, a capacitor 11, an intermittent voltage generation circuit 110, a transformer 12, a rectifying and smoothing circuit 120, synchronous rectifier element drive circuits 17 and 18, a resistor 19, a control unit 20, and an output voltage detection unit 21. In addition, the power supply device 1 further includes an abnormality detection circuit 130, a load current detection circuit 150, and a protection circuit 160. Note that the rectifier circuit 100, the capacitor 11, the intermittent voltage generation circuit 110, the transformer 12, the rectifying and smoothing circuit 120, the synchronous rectifier element drive circuits 17 and 18, the resistor 19, the control unit 20, the output voltage detection unit 21, the abnormality detection circuit 130, the load current detection circuit 150, and the protection circuit 160 constitute a power supply circuit 10.

The rectifier circuit 100 is a circuit that rectifies an AC input voltage. The rectifier circuit 100 in the drawing is configured by a bridge rectifier circuit. The AC power supply 2 is connected to a pair of input terminals of the rectifier circuit 100. A high potential output terminal and a low potential output terminal of the rectifier circuit 100 are connected to the capacitor 11 and the intermittent voltage generation circuit 110 connected in parallel.

The capacitor 11 smooths a voltage output from the rectifier circuit 100 and input to the intermittent voltage generation circuit 110.

The intermittent voltage generation circuit 110 generates an intermittent voltage from an input voltage from an external power supply. The intermittent voltage generation circuit 110 in the drawing is an example in which the intermittent voltage generation circuit 110 is configured by a half-bridge type circuit. The intermittent voltage generation circuit 110 includes switching elements 111 and 112 and capacitors 113 and 114. As the switching elements 111 and 112, MOS transistors can be used. The switching elements 111 and 112 are alternately and repeatedly turned on and off, whereby an intermittent voltage, which is a pulse voltage, is generated from the output voltage of the rectifier circuit 100 smoothed by the capacitor 11. This intermittent voltage is applied to a primary winding of the transformer 12. Note that a circuit other than the half-bridge type, for example, a full-bridge type circuit can also be applied to the intermittent voltage generation circuit 110.

The transformer 12 insulates the primary side and the secondary side of the power supply device 1 and converts the output voltage of the intermittent voltage generation circuit 110. A secondary winding of the transformer 12 is connected to the rectifying and smoothing circuit 120.

The rectifying and smoothing circuit 120 is a circuit that rectifies and smooths the pulse voltage from the secondary winding of the transformer 12 to generate a DC voltage. The rectifying and smoothing circuit 120 includes switching elements 13 and 14, an inductor 15, and a capacitor 16. As the switching elements 13 and 14, n-channel MOS transistors can be used.

One end of the secondary winding of the transformer 12 is connected to a source of the switching element 13, and the other end of the secondary winding of the transformer 12 is connected to a source of the switching element 14. An intermediate tap of the secondary winding of the transformer 12 is connected to one end of the inductor 15. The other end of the inductor 15 is connected to a wiring 41. The capacitor 16 is connected between the wiring 41 and a reference potential line 40. Drains of the switching element 13 and the switching element 14 are commonly connected to the reference potential line 40. A gate of the switching element 13 is connected to the synchronous rectifier element drive circuit 17 via a signal line 50. A gate of the switching element 14 is connected to the synchronous rectifier element drive circuit 18 via a signal line 51. The rectifying and smoothing circuit 120 in the drawing is an example in which the rectifying and smoothing circuit 120 is configured by a full-wave rectifier circuit.

The switching element 13 and the switching element 14 correspond to synchronous rectifier elements. The switching element 13 is driven on and off in synchronization with the switching element 111. In addition, the switching element 14 is driven on and off in synchronization with the switching element 112. As a result, synchronous rectification of the switching elements 13 and 14 is performed. A control signal from the synchronous rectifier element drive circuit 17 is input to the gate of the switching element 13. A control signal from the synchronous rectifier element drive circuit 18 is input to the gate of the switching element 14. In addition, the inductor 15 and the capacitor 16 constitute a smoothing circuit.

The synchronous rectifier element drive circuit 17 generates the control signal for the switching element 13. This control signal is transmitted via the signal line 50. In addition, a drain voltage and a source voltage of the switching element 13 are input to the synchronous rectifier element drive circuit 17 via the signal line. The synchronous rectifier element drive circuit 17 detects on/off timings on the basis of a drain-source voltage (Vds) of the switching element 13 and generates the control signal. The synchronous rectifier element drive circuit 18 generates the control signal for the switching element 14. This control signal is transmitted via the signal line 51. Similarly to the synchronous rectifier element drive circuit 17, a drain voltage and a source voltage of the switching element 14 are input to the synchronous rectifier element drive circuit 18 via the signal line. The synchronous rectifier element drive circuit 18 generates the control signal on the basis of Vds of the switching element 14.

The wiring 41 is connected to a wiring 42 via the resistor 19. The wiring 42 and the reference potential line 40 are connected to the load 3 and supply a load current to the load 3. The resistor 19 is a resistor for detecting the load current.

The abnormality detection circuit 130 detects an abnormality in the synchronous rectifier element drive circuits 17 and 18. This abnormality corresponds to a case where the control signal is not supplied in at least one of the synchronous rectifier element drive circuits 17 and 18. The abnormality detection circuit 130 is wired by the above-described signal lines 50 and 51. In addition, the detection result of the abnormality in the abnormality detection circuit 130 is output to the protection circuit 160. Details of the configuration of the abnormality detection circuit 130 will be described later.

The load current detection circuit 150 detects the load current. The load current detection circuit 150 detects the load current on the basis of a voltage between terminals of the resistor 19. The detected load current is output to the protection circuit 160. Details of the configuration of the load current detection circuit 150 will be described later.

The protection circuit 160 performs a protection operation on the basis of the detection result of the abnormality detection circuit 130 and the detection result of the load current detection circuit 150. Details of the configuration of the protection circuit 160 will be described later.

The output voltage detection unit 21 detects an output voltage (voltage of the wiring 41). The detected output voltage is output to the control unit 20.

The control unit 20 controls the switching elements 111 and 112. The control unit 20 controls on and off of the switching elements 111 and 112 on the basis of a signal from the output voltage detection unit 21 to stabilize the output voltage of the power supply device 1.

### Synchronous rectifier element

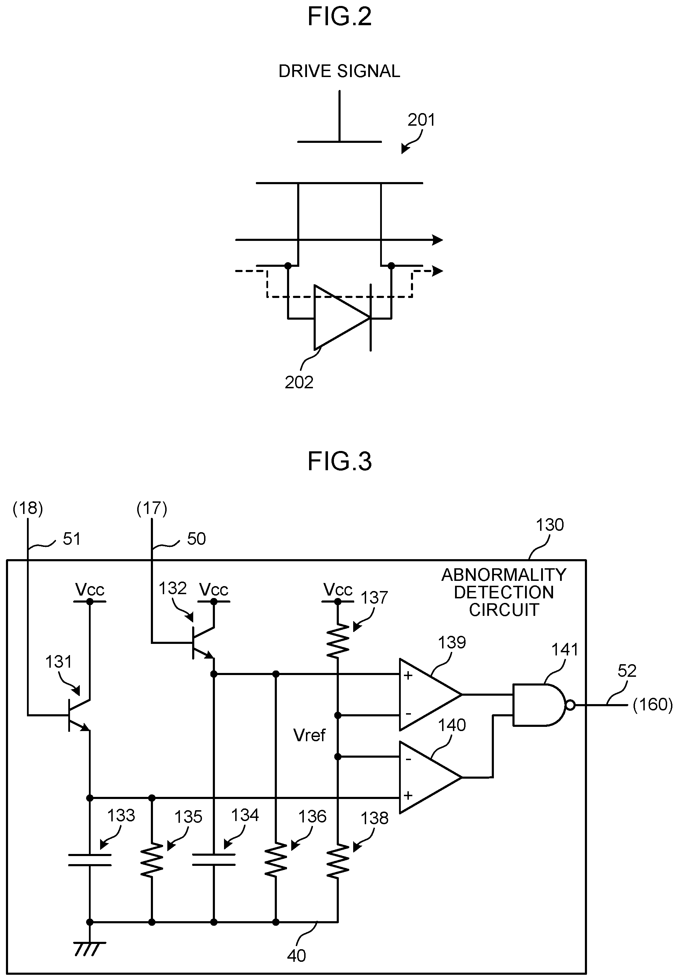

FIG. 2 is a diagram illustrating an example of a synchronous rectifier element according to the first embodiment of the present disclosure. The drawing is a diagram illustrating a MOS transistor 201 constituting the synchronous rectifier element. When a drive signal (control signal) is input to a gate of the MOS transistor 201, the MOS transistor 201 is brought into a conductive state and a current flows. The solid arrow in the drawing indicates a current flowing from a source to a drain of the MOS transistor 201. In this case, the voltage drop is relatively small. In a case where the drive signal is not input to the gate for some reason, a body diode 202 is conducted, and a current flows through the body diode 202. Since the voltage drop of the body diode is about 0.6 V, the loss increases.

As described above, when the supply of the control signal for the synchronous rectifier element is stopped due to a failure of the synchronous rectifier element drive circuit 17 or the like or a failure of a wiring, the loss of the synchronous rectifier element increases. In a case where the heat dissipation of the synchronous rectifier element is not sufficient, the synchronous rectifier element is damaged.

Therefore, the abnormality detection circuit 130 is arranged to detect an abnormality in the synchronous rectifier element drive circuit 17 or the like.

### Configuration of abnormality detection circuit

FIG. 3 is a diagram illustrating a configuration example of the abnormality detection circuit according to the first embodiment of the present disclosure. The drawing is a circuit diagram illustrating a configuration example of the abnormality detection circuit 130. The abnormality detection circuit 130 includes transistors 131 and 132, capacitors 133 and 134, resistors 135 to 138, comparators 139 and 140, and a NAND gate 141. As the transistors 131 and 132, npn transistors can be used. As the NAND gate 141, a two-input NAND gate can be used. In addition, the abnormality detection circuit 130 is wired by a power supply line Vcc for supplying power.

A base of the transistor 131 is connected to the signal line 51, and a collector of the transistor 131 is connected to the power supply line Vcc. An emitter of the transistor 131 is connected to one end of the capacitor 133, one end of the resistor 135, and a non-inverting input terminal of the comparator 140. The other end of the capacitor 133 and the other end of the resistor 135 are connected to the reference potential line 40. A base of the transistor 132 is connected to the signal line 50, and a collector of the transistor 132 is connected to the power supply line Vcc. An emitter of the transistor 132 is connected to one end of the capacitor 134, one end of the resistor 136, and a non-inverting input terminal of the comparator 139. The other end of the capacitor 134 and the other end of the resistor 136 are connected to the reference potential line 40. One end of the resistor 137 is connected to the power supply line Vcc, and the other end is connected to an inverting input terminal of the comparator 139, an inverting input terminal of the comparator 140, and one end of the resistor 138. The other end of the resistor 138 is connected to the reference potential line 40. An output terminal of the comparator 139 and an output terminal of the comparator 140 are each connected to an input terminal of the NAND gate 141. An output terminal of the NAND gate 141 is connected to a signal line 52.

The transistors 131 and 132 constitute a buffer amplifier. The capacitor 133 is charged by the control signal for the gate of the switching element 14. The resistor 135 discharges the electric charge of the capacitor 133. As described later, the control signal for the gate is a pulse train. When the capacitor 133 is charged by the control signal for the gate, the voltage of the non-inverting input terminal of the comparator 140 increases. A threshold Vref generated by the resistors 137 and 138 is applied to the inverting input terminal of the comparator 140. While the control signal for the gate is repeatedly input, the voltage of the non-inverting input terminal of the comparator 140 exceeds Vref, and thus the output terminal of the comparator 140 is at the H level.

When the control signal for the gate of the switching element 14 is interrupted, the voltage of the capacitor 133 decreases due to the action of the resistor 135. When the voltage of the capacitor 133 becomes lower than Vref, the output terminal of the comparator 140 becomes at the L level.

The capacitor 134 is charged by the control signal for the gate of the switching element 13. The resistor 136 discharges the electric charge of the capacitor 134. As described later, when the capacitor 134 is charged by the control signal for the gate, the output terminal of the comparator 139 is at the H level. On the other hand, when the control signal for the gate of the switching element 13 is interrupted, the voltage of the capacitor 134 decreases due to the action of the resistor 136. When the voltage of the capacitor 134 becomes lower than Vref, the output terminal of the comparator 139 becomes at the L level.

When at least one of the output terminal of the comparator 139 and the output terminal of the comparator 140 is at the L level, the output of the NAND gate 141 is at the H level. The H level signal is a signal indicating detection of an abnormality. This signal is transmitted to the protection circuit 160 via the signal line 52.

### Abnormality detection

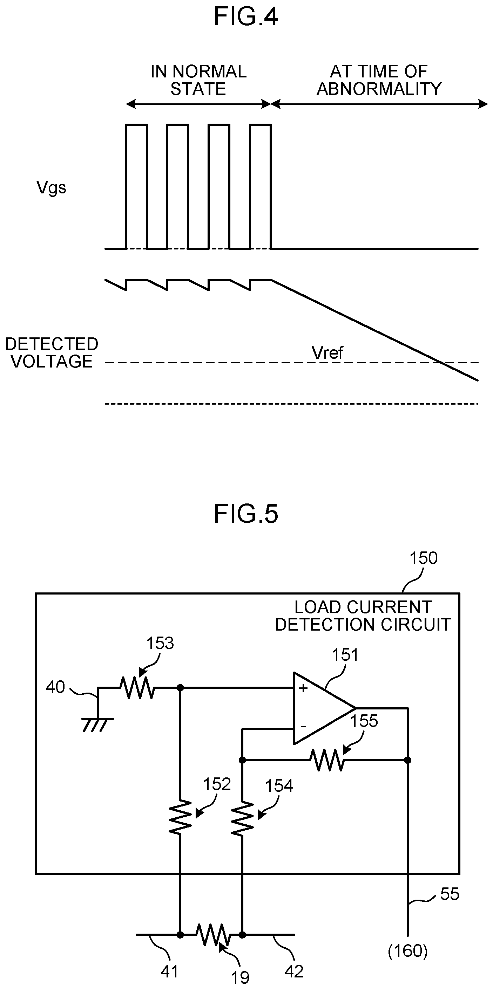

FIG. 4 is a diagram illustrating an example of abnormality detection according to the first embodiment of the present disclosure. This drawing is a diagram for describing the operation of the abnormality detection circuit 130. In the drawing, "Vgs" represents a control signal waveform applied to the gate of the switching element 13 or 14. In addition, the "detected voltage" represents a voltage waveform of the capacitor 133 or 134 in FIG. 3.

In the normal state, a pulse-shaped control signal is applied, and the detected voltage is a voltage exceeding Vref. At the time of abnormality, for example, when the synchronous rectifier element drive circuit 17 or the like is damaged, the supply of the control signal is stopped. As a result, the detected voltage gradually decreases. When the detected voltage becomes lower than Vref, the H level abnormality detection signal is output by the comparator 139 or the like.

### Configuration of load current detection circuit

FIG. 5 is a diagram illustrating a configuration example of the load current detection circuit according to the first embodiment of the present disclosure. The drawing is a circuit diagram illustrating a configuration example of the load current detection circuit 150. Note that the resistor 19 is further illustrated in the drawing. The load current detection circuit 150 includes an OP amplifier 151 and resistors 152 to 155. The resistor 152 and the resistor 153 connected in series are connected between the wiring 41 and the reference potential line 40. A non-inverting input terminal of the OP amplifier 151 is connected to a midpoint between the resistor 152 and the resistor 153. The resistor 154 is connected between the wiring 42 and the inverting input terminal of the OP amplifier 151. An output terminal of the OP amplifier 151 is connected to a signal line 55. The resistor 155 is connected between the inverting input terminal and the output terminal of the OP amplifier 151.

The load current detection circuit 150 amplifies the voltage of the resistor 19 by a differential amplifier circuit using the OP amplifier 151, and generates an analog signal indicating the load current. The signal indicating the load current is transmitted to the protection circuit 160 via the signal line 55.

### [Configuration of protection circuit]

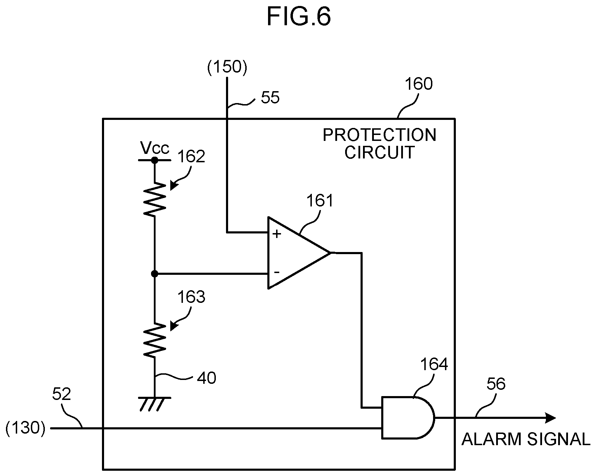

FIG. 6 is a diagram illustrating a configuration example of the protection circuit according to the first embodiment of the present disclosure. The drawing is a circuit diagram illustrating a configuration example of the protection circuit 160. The protection circuit 160 includes a comparator 161, resistors 162 and 163, and an AND gate 164. Note that, as the AND gate 164, a two-input AND gate can be used.

The resistor 162 and the resistor 163 connected in series are connected between the power supply line Vcc and the reference potential line 40. A non-inverting input terminal of the comparator 161 is connected to the signal line 55, and an inverting input terminal of the comparator 161 is connected to a midpoint between the resistor 162 and the resistor 163. An output terminal of the comparator 161 and the signal line 52 are each connected to an input terminal of the AND gate 164. An output terminal of the AND gate 164 is connected to a signal line 56.

A threshold voltage set by the resistors 162 and 163 is input to the inverting input terminal of the comparator 161. The signal indicating the load current is input to the non-inverting input terminal of the comparator 161 via the signal line 55. When the load current exceeds the above-described threshold voltage, the output terminal of the comparator 161 is at the H level. By the action of the AND gate 164, an H level alarm signal is generated in a case where the H level signal is input from the abnormality detection circuit 130 and the load current exceeds the threshold.

In a case where the current of the switching element 13, which is a synchronous rectifier element, is small, the synchronous rectifier element drive circuit 17 or the like cannot detect the voltage of the switching element 13 and may not generate the control signal. Even in this case, the abnormality detection circuit 130 detects an abnormality and outputs the H level abnormality detection signal. Therefore, the protection circuit 160 disables the abnormality detection signal in a case where the load current is lower than the predetermined threshold. In a case where the load current exceeds the threshold and the abnormality detection circuit 130 detects an abnormality, the protection circuit 160 generates the alarm signal and outputs the alarm signal to the outside. As described above, the protection circuit 160 performs a protection operation of generating the abnormality detection signal when the abnormality detection circuit 130 detects an abnormality and the load current detection circuit detects a load current larger than the predetermined threshold.

As described above, the power supply device 1 according to the first embodiment of the present disclosure detects an abnormality in a synchronous rectifier element and protects the synchronous rectifier element. As a result, it is possible to prevent the synchronous rectifier element from being damaged.

### 2. Second embodiment

The power supply device 1 according to the above-described first embodiment outputs the alarm signal when detecting an abnormality. Meanwhile, a power supply device 1 according to a second embodiment of the present disclosure is different from that of the above-described first embodiment in including a current limiting circuit that limits the load current and adjusting an operating point of the current limiting circuit at the time of abnormality.

### Configuration of power supply device

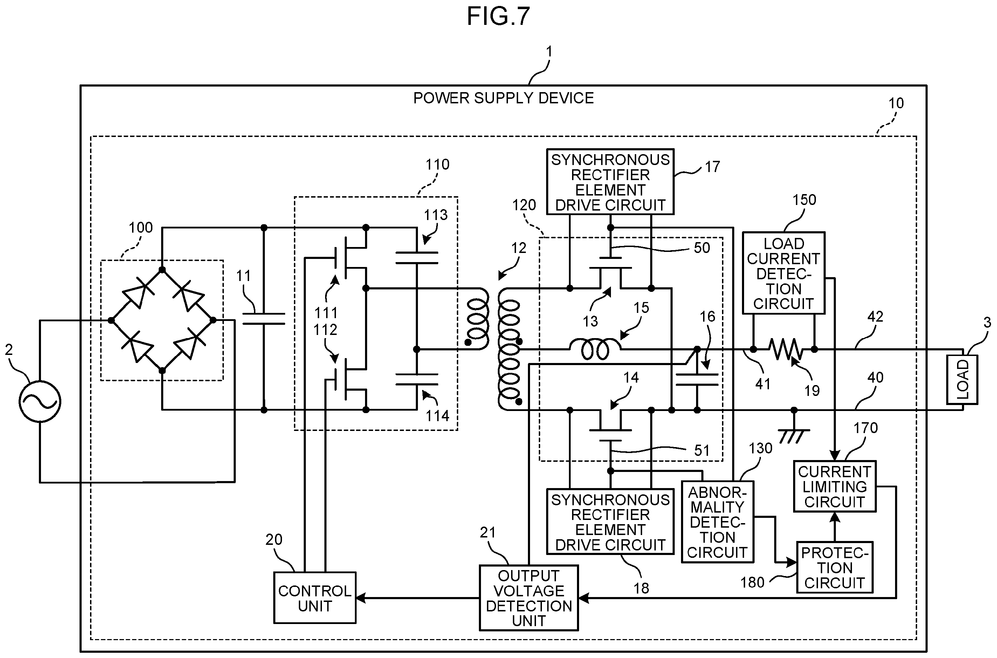

FIG. 7 is a diagram illustrating a configuration example of the power supply device according to the second embodiment of the present disclosure. The drawing is a circuit diagram illustrating a configuration example of the power supply device 1 similarly to FIG. 1. The power supply device 1 in the drawing is different from the power supply device 1 in FIG. 1 in including a protection circuit 180 instead of the protection circuit 160 and further including a current limiting circuit 170.

The current limiting circuit 170 is a circuit that limits the load current to a predetermined current. The current limiting circuit 170 performs current limitation on the basis of the load current detected by the load current detection circuit 150. Specifically, the current limiting circuit 170 performs an operation of preventing an increase in the load current by outputting a voltage drop signal to the output voltage detection unit 21 when the load current detected by the load current detection circuit 150 reaches a predetermined threshold. Details of the configuration of the current limiting circuit 170 will be described later.

The protection circuit 180 performs, as a protection operation, an operation of adjusting the threshold of the current limiting circuit 170 when the abnormality detection circuit 130 detects an abnormality. Details of the configuration of the protection circuit 180 will be described later.

### Configuration of current limiting circuit and protection circuit

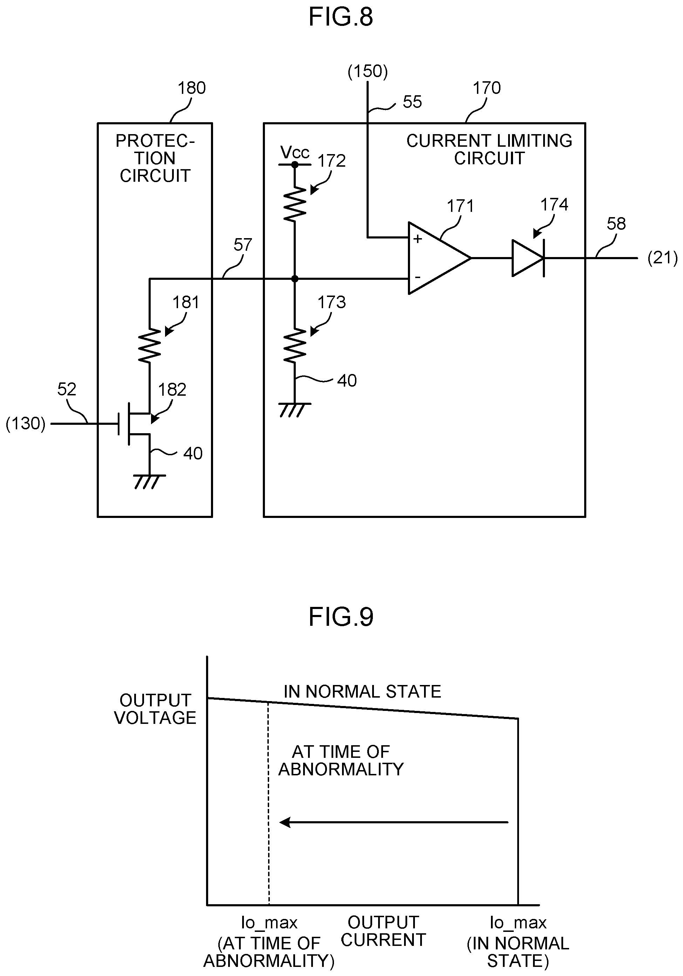

FIG. 8 is a diagram illustrating a configuration example of the current limiting circuit and the protection circuit according to the second embodiment of the present disclosure. The drawing is a circuit diagram illustrating a configuration example of the current limiting circuit 170 and the protection circuit 180. The current limiting circuit 170 includes a comparator 171, resistors 172 and 173, and a diode 174.

The resistors 172 and 173 connected in series are connected between the power supply line Vcc and the reference potential line 40. An inverting input terminal of the comparator 171 is connected to a midpoint between the resistors 172 and 173. A non-inverting input terminal of the comparator 171 is connected to the signal line 55. An output terminal of the comparator 171 is connected to an anode of the diode 174. A cathode of the diode 174 is connected to a signal line 58. Note that a signal line 57 from the protection circuit 180 is further connected to the midpoint between the resistors 172 and 173.

In a case where a load current signal from the load current detection circuit 150 exceeds the threshold generated by the resistors 172 and 173, the output terminal of the comparator 171 is at the H level. The H level signal is transmitted to the output voltage detection unit 21 via the signal line 58. The output voltage detection unit 21 then adjusts the signal to be output to the control unit 20 to lower the output voltage. Note that the diode 174 prevents backflow of the signal.

The protection circuit 180 includes a MOS transistor 182 and a resistor 181. One end of the resistor 181 is connected to the signal line 57. The other end of the resistor 181 is connected to a drain of the MOS transistor 182. A gate of the MOS transistor 182 is connected to the signal line 52, and a source thereof is connected to the reference potential line 40.

When the abnormality detection circuit 130 detects an abnormality and outputs the H level signal, the MOS transistor 182 becomes conductive. As a result, the resistor 181 is connected in parallel to the resistor 173. Therefore, the threshold of the comparator 171 decreases. The operating point of the current limiting circuit 170 is adjusted.

### Operation of current limiting circuit and protection circuit

FIG. 9 is a diagram illustrating an example of operation of the current limiting circuit and the protection circuit according to the second embodiment of the present disclosure. The drawing is a diagram for describing the operation of the current limiting circuit 170 and the protection circuit 180. In the drawing, the vertical axis represents the output voltage. The horizontal axis represents the output current. In the normal state, the current limiting circuit 170 limits the output current to "Io_max (in normal state)" in the drawing. At the time of abnormality, that is, in a case where the abnormality detection circuit 130 detects an abnormality, the operating point of the current limiting circuit 170 is adjusted to the position of the dotted line by the action of the protection circuit 180. Therefore, at the time of abnormality, the current limiting circuit 170 limits the output current to "Io_max (at time of abnormality)" in the drawing.

The configuration of the power supply device 1 other than the above-described parts is similar to the configuration of the power supply device 1 in the first embodiment of the present disclosure, and thus the description thereof will be omitted.

As described above, the power supply device 1 according to the second embodiment of the present disclosure performs control to reduce the limit value of the output current when a synchronous rectifier element is abnormal. This makes it possible to prevent an increase in the loss of the synchronous rectifier element.

### 3. Third embodiment

The power supply device 1 according to the above-described first embodiment includes the protection circuit 160. Meanwhile, a power supply device 1 according to a third embodiment of the present disclosure is different from that of the above-described first embodiment in further including the current limiting circuit 170 and the protection circuit 180.

### Configuration of power supply device

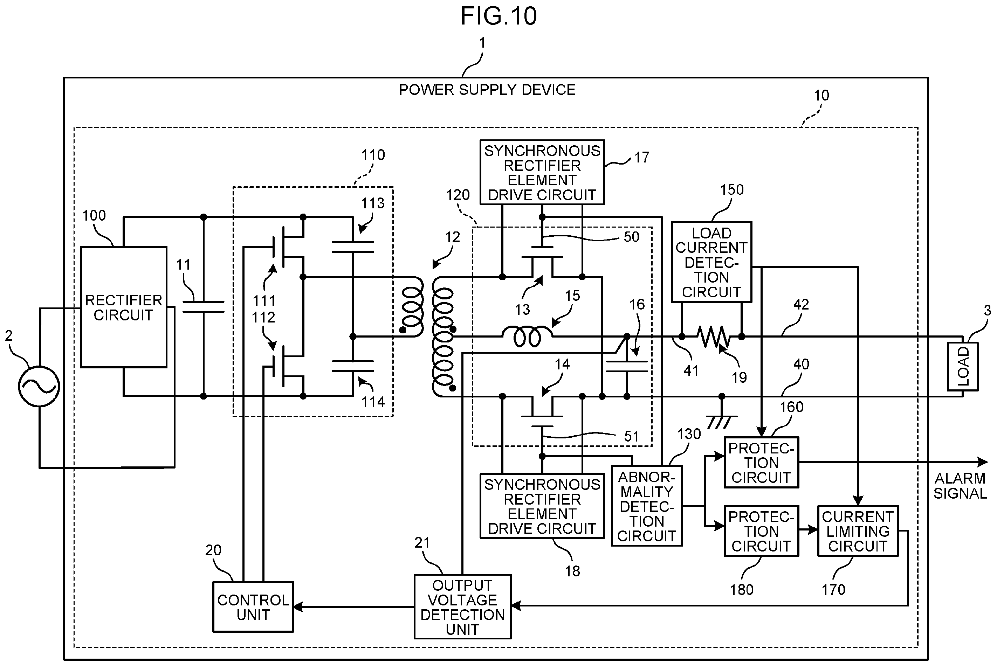

FIG. 10 is a diagram illustrating a configuration example of the power supply device according to the third embodiment of the present disclosure. The drawing is a circuit diagram illustrating a configuration example of the power supply device 1 similarly to FIG. 1. The power supply device 1 in the drawing is different from the power supply device 1 in FIG. 1 in further including the current limiting circuit 170 and the protection circuit 180.

The configuration of the power supply device 1 other than the above-described parts is similar to the configuration of the power supply device 1 in the first embodiment of the present disclosure, and thus the description thereof will be omitted.

As described above, the power supply device 1 according to the third embodiment of the present disclosure includes the protection circuit 160 and the protection circuit 180. As a result, it is possible to detect an abnormality in a synchronous rectifier element and protect the synchronous rectifier element, and it is possible to reduce the loss of the synchronous rectifier element.

### 4. Fourth embodiment

In the power supply device 1 according to the above-described first embodiment, one power supply circuit 10 supplies power to the load 3. Meanwhile, a power supply device 1 according to a fourth embodiment of the present disclosure is different from that of the above-described first embodiment in that a plurality of power supply circuits 10 connected in parallel supplies power to the load 3.

### Configuration of power supply device

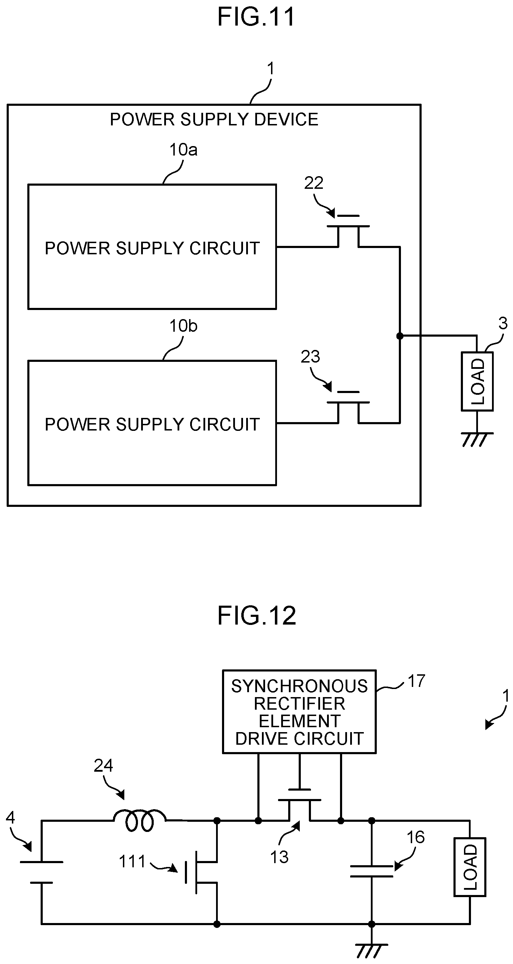

FIG. 11 is a diagram illustrating a configuration example of the power supply device according to the fourth embodiment of the present disclosure. The drawing is a circuit diagram illustrating a configuration example of the power supply device 1 similarly to FIG. 1. The power supply device 1 in the drawing is different from the power supply device 1 in FIG. 1 in including two power supply circuits 10 (a power supply circuit 10a and a power supply circuit 10b) and further including MOS transistors 22 and 23. Note that illustration of the power supply circuits 10 is simplified in the drawing.

An output (the wiring 42) of the power supply circuit 10a is connected to the load 3 via the MOS transistor 22. Similarly, an output (the wiring 42) of the power supply circuit 10b is connected to the load 3 via the MOS transistor 23. In this manner, the power supply circuit 10a and the power supply circuit 10b are connected in parallel. This makes the power supply device 1 redundant. That is, even in a case where any of the power supply circuit 10a and the power supply circuit 10b fails, power can be supplied to the load 3. Note that the MOS transistors 22 and 23 prevent backflow of the output current in a case where the power supply circuits 10 are damaged. Note that the elements for preventing backflow of the output current are not limited to the MOS transistors. For example, diodes can also be used.

The power supply device 1 having such a configuration has a problem that a user may not be able to detect a failure of the power supply circuits 10 other than a damage of a synchronous rectifier element of the power supply circuits 10. This is because, even in a case where the synchronous rectifier element drive circuit 17 or the like of the power supply circuits 10 is damaged, the synchronous rectifier element continues the rectification operation in a case where the load current is small, and the power supply circuits 10 do not stop the operation. In particular, because of the duplicated power supply circuits 10, even in a case where the power supply circuit 10 on one side is damaged, the power supply device 1 continues to operate in a region where the load current is small. When the power supply circuits 10 are replaced by maintenance or the like in this state, removing the normal power supply circuit 10 causes a load to concentrate on the power supply circuit 10 in which the failure has occurred.

On the other hand, if the power supply circuit 10 illustrated in FIG. 1 is used, the alarm signal is output in a case where the synchronous rectifier element drive circuit 17 or the like fails. Therefore, the user can recognize the failure of the power supply circuit 10.

In addition, in a case where the power supply circuit 10 illustrated in FIG. 10 is used, it is possible to reduce the load current at the time of abnormality in addition to the detection of a failure of the synchronous rectifier element drive circuit 17 or the like. As a result, it is possible to further protect the synchronous rectifier element.

The configuration of the power supply device 1 other than the above-described parts is similar to the configuration of the power supply device 1 in the first embodiment of the present disclosure, and thus the description thereof will be omitted.

As described above, the power supply device 1 according to the fourth embodiment of the present disclosure is configured by the plurality of power supply circuits 10 being connected in parallel. As a result, it is possible to improve redundancy.

### 5. Fifth embodiment

A modification of the power supply circuit 10 according to the above-described first embodiment will be described.

### Configuration of power supply device

FIG. 12 is a diagram illustrating a configuration example of a power supply device according to a fifth embodiment of the present disclosure. The drawing illustrates an example in which a switching power supply circuit configured as a boost chopper circuit is provided. The boost chopper circuit in the drawing includes an external power supply 4, an inductor 24, switching elements 111 and 13, the capacitor 16 and the synchronous rectifier element drive circuit 17. Note that illustration of the abnormality detection circuit 130, the load current detection circuit 150, the protection circuit 160, and the like is omitted. The switching element 13 in the drawing corresponds to a synchronous rectifier element.

Note that the effects described in the present specification are merely examples and are not limited, and other effects may be provided.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A power supply device comprising:
an intermittent voltage generation circuit that generates an intermittent voltage from an input voltage from an external power supply by a switching element that is repeatedly turned on and off;
a rectifying and smoothing circuit that rectifies the intermittent voltage by a synchronous rectifier element that is turned on and off in synchronization with on and off of the switching element, smooths the intermittent voltage by a capacitor, and supplies the intermittent voltage to a load;
a synchronous rectifier element drive circuit that supplies a control signal for turning on and off the synchronous rectifier element to a control terminal of the synchronous rectifier element;
an abnormality detection circuit that detects an abnormality in the synchronous rectifier element drive circuit;
a load current detection circuit that detects a load current that is a current of the load supplied by the rectifying and smoothing circuit; and
a protection circuit that performs a protection operation on a basis of a detection result of the abnormality detection circuit and a detection result of the load current detection circuit.

2. The power supply device according to claim 1, wherein the abnormality detection circuit detects an abnormality in a case where the control signal from the synchronous rectifier element drive circuit is not supplied.

3. The power supply device according to claim 1 or 2, wherein the protection circuit performs, as the protection operation, an operation of generating an abnormality detection signal when the abnormality detection circuit detects an abnormality and the load current detection circuit detects the load current larger than a predetermined threshold.

4. The power supply device according to any one of claim 1 to 3, further comprising
a current limiting circuit that limits the load current on a basis of a predetermined threshold, wherein
the protection circuit performs, as the protection operation, an operation of adjusting the predetermined threshold of the load current detection circuit when the abnormality detection circuit detects an abnormality.

5. The power supply device according to any one of claim 1 to 4, wherein the intermittent voltage generation circuit includes a transformer in which the switching element is connected to a primary winding and the rectifying and smoothing circuit is connected to a secondary winding.

6. The power supply device according to any one of claim 1 to 5, comprising
a plurality of power supply circuits each including the intermittent voltage generation circuit, the rectifying and smoothing circuit, the synchronous rectifier element drive circuit, the abnormality detection circuit, the load current detection circuit, and the protection circuit, wherein
the plurality of power supply circuits is commonly connected to the load.
